# EUROPÄISCHE PATENTANMELDUNG

(11) **EP 2 599 992 A2**
(43) Veröffentlichungstag der Anmeldung: **05.06.2013**
(21) Anmeldenummer: 12006495.1
(22) Anmeldetag: 17.09.2012
(51) Int. Cl.: F03B 13/08

(54) **Laufwasserkraftwerk und Verfahren zur Nutzung der potentiellen Energie zwischen zwei Fließgewässern**

(30) Priorität: 29.11.2011 DE 102011119623
(71) Anmelder: RWE Technology GmbH, 45128 Essen (DE)
(72) Erfinder: Thiele, Frank, 45721 Haltern am See (DE); Heinen, Martin, 41189 Mönchengladbach (DE); Staubert, Mark, 45359 Essen (DE); Brauer, Frank, 44577 Castrop-Rauxel (DE)
(74) Vertreter: polypatent

(57) **Zusammenfassung**

Die Erfindung betrifft ein Laufwasserkraftwerk an einer Stauanlage, die als schiffbarer Kanal (3) ausgebildet ist und einen natürlichen Höhenunterschied zwischen zwei Flussläufen (1, 2) überbrückt und die wenigstens zwei Staustufen (3a, 3b, 3c) aufweist. Das Laufwasserkraftwerk umfasst wenigstens eine wenigstens zwei Staustufen überbrückende Zuführung (5a, 5b, 5c), wobei in der Zuführung wenigstens eine Turbine (7) angeordnet ist, die die potentielle Energie aufgrund des geodätischen Höhenunterschieds zwischen wenigstens zwei Staustufen (3a, 3b, 3c) nutzt.

## Beschreibung

Die Erfindung betrifft ein Laufwasserkraftwerk. Die Erfindung betrifft weiterhin auch ein Verfahren zur Speicherung und Nutzung der potentiellen Energie zwischen zwei Fließgewässern, die mittels einer Stauanlage, beispielsweise eines Kanals, verbunden sind.

Laufwasserkraftwerke bestehen üblicher Weise aus wenigstens einer Turbine und werden zur Gewinnung elektrischer Energie aus fließenden Gewässern und Tidengewässern verwendet. Aus der EP 1 548 276 A1 ist beispielsweise ein Laufwasserkraftwerk bekannt, das aus einer Radialturbine, einem beweglichen Mittelwehr und zwei festen Seitenwehren besteht. Über die gesamte Länge des Gewässers werden abhängig vom Gefälle die Anlagen in unterschiedlichen Abständen eingebaut und nutzen jeweils einen zulässigen Teil des Bettes als Stauraum. Jedes der Laufwasserkraftwerke erzeugt somit im Bett des Gewässers eine eigene Stauhöhe.

Ein solches Laufwasserkraftwerk stellt eine erhebliche Beeinträchtigung des freien Querschnitts des Gewässers dar. Darüber hinaus sind der Regelbarkeit des Kraftwerks Grenzen gesetzt.

Die Nutzung von Stauanlagen zur Erzeugung von elektrischer Energie, in denen die Pegelstände durch das Öffnen und Schließen von Wehranlagen geregelt ist, ist beispielsweise aus der WO 03/054387 A1 beschrieben. Diese Druckschrift beschreibt ein Verfahren zum Regeln des Pegelstandes einer Stauanlage, beispielsweise eines Staudamms oder eines Stauwehrs, wobei in der Stauanlage zum Erzeugen elektrischer Energie eine Anzahl von Turbinen-Generatoreinheiten angeordnet sind, die zumindest abschnittsweise übereinander und/oder nebeneinander angeordnet und miteinander zu mehreren Turbinen-Generatormodulen verbunden sind. Der Pegelstand wird teilweise durch das Zu- und Wegschalten von einzelnen bzw. mehreren Turbinen-Generatoreinheiten auf einen vorgebbaren Sollwert geregelt. Die WO 03/054387 A1 beschreibt weiterhin eine Anlage zum Regeln des Pegelstandes einer Stauanlage, wobei die Turbinen-Generatoreinheiten in einem Stauwehr integriert sind. Solche Anlagen sind mit dem Nachteil behaftet, dass diese nur eine diskontinuierliche Stromerzeugung ermöglichen.

Der Erfindung liegt die Aufgabe zugrunde, die potentielle Energie zwischen zwei Gewässern auf unterschiedlichem Niveau zumindest teilweise dauerhaft zur Verfügung zu stellen.

Das erfindungsgemäße Laufwasserkraftwerk sowie das erfindungsgemäße Verfahren soll insbesondere auch eine besonders günstige Regelung einer sogenannten "Must-Run-Stromerzeugung" bieten.

Die der Erfindung zugrundeliegende Aufgabe wird einerseits gelöst durch ein Laufwasserkraftwerk an einer Stauanlage, die einen Höhenunterschied zwischen natürlichen Fließgewässern überbrückt und die wenigstens zwei Staustufen aufweist, umfassend wenigstens eine wenigstens zwei Staustufen überbrückende Zuführung, wobei in der Zuführung wenigstens eine Turbine angeordnet ist, die die potentielle Energie aufgrund des geodätischen Höhenunterschieds zwischen wenigstens zwei Staustufen nutzt.

Unter einer Stauanlage im Sinne der Erfindung ist beispielsweise ein schiffbarer Kanal mit mehreren Staustufen zu verstehen. Kanäle haben in der Regel ihren Ursprung am Oberlauf eines Flusses und enden in ihrem Kanalverlauf wieder in einem Fluss. Das Wasser des Kanals wird in Abhängigkeit des vorhandenen Wasserabflusses durch einen oder mehrere Flüsse gespeist. Die geodätischen Höhendifferenzen zwischen Wasserzufluss und Wasserabfluss, d. h. innerhalb eines oder mehrerer Kanäle/Stauanlagen, wird mit Hilfe von Schleusen in Staustufen überbrückt. Dabei erfolgt bei Betrieb der Stauanlage üblicherweise eine Wasserentnahme aus dem Oberwasser in das Unterwasser.

Als Zuführung kann beispielsweise ein Seitenkanal vorgesehen sein.

Die Erfindung nutzt in vorteilhafter Art und Weise die Höhendifferenz zwischen den das Oberwasser und das Unterwasser bildenden Gewässern zur zusätzlichen Stromerzeugung aus. Dabei sind eine oder mehrere Turbinen anders als beim Stand der Technik nicht in die Stauanlage integriert, sondern in eine wenigstens zwei Staustufen überbrückende Zuführung. Erfindungsgemäß ist damit einerseits ein kontinuierlicher Parallelbetrieb der Turbine unabhängig vom Pegelstand der jeweiligen Staustufe möglich, andererseits lässt sich durch ein solches Laufwasserkraftwerk zusätzlich wenigstens eine Staustufe als Energiespeicher nutzen, um die Durchflussmenge durch die Zuführung und damit die Stromerzeugung zu regeln. Hiermit kommt eine intelligente Steuerung zum Einsatz, welche die aktuelle Abflussmenge des Flusses überwacht, die aktuellen Messergebnisse mit den gesetzlichen Bestimmungen zur Wasserentnahme des jeweiligen Flusses abgleicht und der automatische Wassereinlauf ins Kanalsystem somit von Kanal Oberlauf/Unterlauf geregelt wird.

Unter Zuführung im Sinne der Erfindung sind offene Kanäle, geschlossene Leitungen und/oder Röhren zu verstehen.

Bei einer zweckmäßigen Variante des Laufwasserkraftwerks gemäß der Erfindung ist vorgesehen, dass in der Zuführung wenigstens ein Rotationsbecken oder ein Rotationsrohr oder Tos-Rohr zur Erzeugung von Gravitationswirbeln vorgesehen ist und dass die Turbine als Wasserwirbelturbine ausgebildet ist. Dies hat den Vorzug, dass eine Turbine im Zentrum eines Rotationsbeckens oder eines Rotationsrohrs so angeordnet werden kann, dass die entstehenden Gravitationswirbel eine tangentiale Anströmung an entsprechend ausgebildeten Wasserwirbelturbinen mit beispielsweise senkrecht ausgerichtetem Läufer und Radialbeschaufelung erzeugt. Wasserwirbelturbinen sind mit niedrigen Drehzahlen und hohen Drehmomenten betreibbar. Über einen verhältnismäßig geringen geodätischen Höhenunterschied lässt sich ein verhältnismäßig großes Rotationsmoment erzeugen. Dadurch sind insbesondere für Rotationsbecken und darin angeordnete Turbinen erhebliche Einsparungen an Bauhöhe möglich.

Unter Turbine im Sinne der Erfindung ist auch eine kombinierte Turbinen-Generatoreinheit zu verstehen.

Bei einer zweckmäßigen Variante des Laufwasserkraftwerks gemäß der Erfindung ist vorgesehen, dass die Zuführung geregelt absperrbar an wenigstens eine Staustufe, vorzugsweise einlaufseitig und auslaufseitig an wenigstens jeweils eine Staustufe angeschlossen ist.

Alternativ kann vorgesehen sein, dass die Zuführung sich regelbar absperrbar zwischen den Fließgewässern erstreckt und sowohl einlaufseitig als auch auslaufseitig an eines der Fließgewässer angeschlossen ist.

In der Zuführung können mehrere Turbinen angeordnet sein, deren Anzahl vorzugsweise der Anzahl der zu überbrückenden Staustufen entspricht. Auf diese Art und Weise ist eine optimale Regelbarkeit des Systems gewährleistet, insbesondere wenn jede Staustufe mittels einer separaten Zuführung und einer Turbine überbrückbar ist. In diesem Fall kann eine jede der Staustufen als "Stromspeicher" benutzt werden. Die die Staustufen überbrückenden Zuführungen sind jeweils einzeln absperrbar bzw. mit einem Teilstrom beaufschlagbar, so dass je nach Anzahl der Staustufen und Turbinen sich die Anzahl der Regelungsstufen erhöht.

Zweckmäßiger Weise ist die Turbine in einem Rotationsbecken oder auslaufseitig eines Rotationsrohres angeordnet. In dem Rotationsbecken und/oder in dem Rotationsrohr können entsprechende Strömungseinbauten vorgesehen sein, die die Bildung von Gravitationswasserwirbeln begünstigen.

Die der Erfindung zugrundeliegende Aufgabe wird weiterhin gelöst durch ein Verfahren zur Nutzung der potentiellen Energie zwischen zwei Gewässern, die ein Oberwasser und ein Unterwasser bilden und die über wenigstens eine Stauanlage zwecks Überbrückung der Höhendifferenz miteinander verbunden sind, wobei das Verfahren die Abzweigung wenigstens eines Teilstroms aus dem Oberwasser über wenigstens eine Zuführung, das Betreiben wenigstens einer Turbine mit dem abgezweigten Teilstrom und das Einspeisen des energetisch genutzten Teilstrom in das Unterwasser oder in eine untere Staustufe umfasst. Mit dem Verfahren gemäß der Erfindung soll die Nutzung dauerhaft ohne eine Regelung des Pegelstandes der Gewässer, insbesondere der Staustufen möglich sein, wobei eine solche Regelung grundsätzlich nicht ausgeschlossen ist.

Bei einer vorteilhaften Variante des Verfahrens gemäß der Erfindung ist vorgesehen, dass jeweils ein Teilstrom von einer oberen Staustufe in eine untere Staustufe abgezweigt wird und dass jeder Teilstrom über eine Turbine geführt wird.

Besonders zweckmäßig ist es, wenn dem abgezweigten Teilstrom stromaufwärts einer Turbine eine Rotationsströmung aufgegeben wird. Dies ist insbesondere dann zweckmäßig, wenn die Turbine als Wasserwirbelturbine ausgebildet ist.

Bei einer Variante des Verfahrens gemäß der Erfindung erfolgt eine Regelung der Durchflussmenge des abgezweigten Teilstroms über eine Speicherung von Wasser in wenigstens einer Staustufe.

Die Erfindung wird nachstehend anhand eines in den Zeichnungen dargestellten Ausführungsbeispiels erläutert.
- Fig. 1:: Ein Geländeprofil mit zwei Fließgewässern im Querschnitt und einem sich dazwischen erstreckenden schiffbaren Kanal im Längsschnitt und
- Fig. 2:: eine Draufsicht auf die Darstellung aus Figur 1.

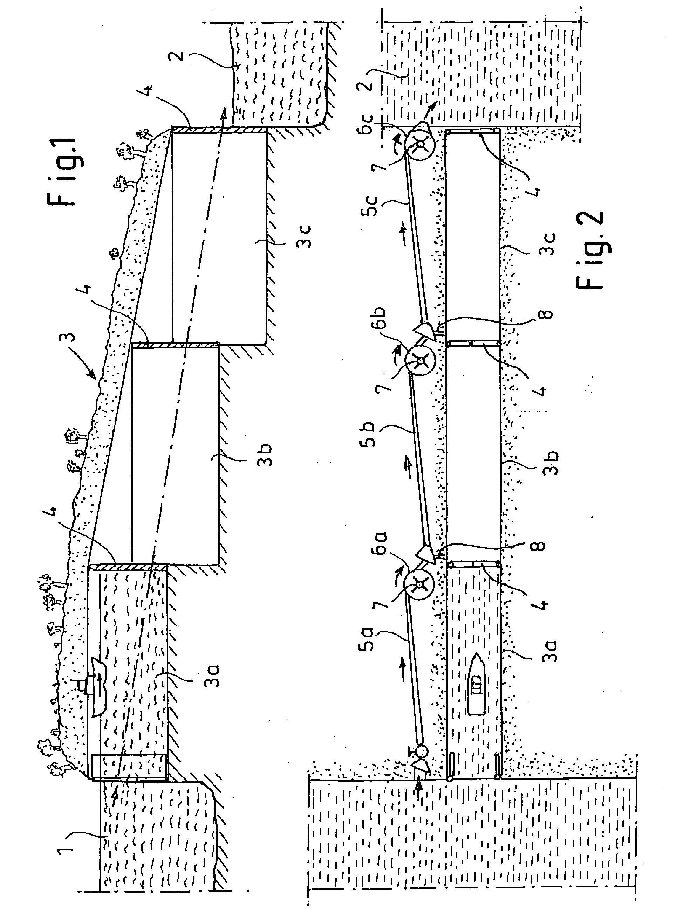

Fig. 1 zeigt, wie vorstehend bereits erwähnt, zwei Flussläufe 1, 2 auf unterschiedlichen Geländeniveaus, wobei der erste Flusslauf 1 ein Oberwasserniveau und der zweite Flusslauf 2 ein Unterwasserniveau definiert. Zwischen dem ersten Flusslauf 1 und dem zweiten Flusslauf 2 erstreckt sich ein Kanal 3 mit mehreren Staustufen 3a, 3b, 3c. Die einzelnen Staustufen 3a, 3b, 3c sind in bekannter Art und Weise über Wehre 4 voneinander abgetrennt. An dem ersten oberen Flusslauf 1 als Fließgewässer ist eine erste Zuführung 5a angeschlossen, die die erste Staustufe 3a überbrückt und an die zweite Staustufe 3b sowie an eine zweite Zuführung 5b angeschlossen ist. Die zweite Zuführung 5b ist einlaufseitig an die zweite Staustufe 3b und auslaufseitig an die dritte Staustufe 3c und an eine dritten Zuführung 5c angeschlossen. Die dritte Zuführung 5c ist wiederum an die dritte Staustufe 3c einlaufseitig und auslaufseitig an den unteren Flusslauf 2 angeschlossen. In jeder der Zuführungen 5a, 5b, 5c ist ein Rotationsbecken 6a, 6b, 6c angeordnet, in dessen Zentrum jeweils eine Turbinen-Generatoreinheit 7 vorgesehen ist. Anstelle eines Rotationsbeckens kann auch ein sich etwa senkrecht erstreckendes Tos-Rohr vorgesehen sein. Die Turbinen-Generatoreinheit 7 umfasst zweckmäßiger Weise einen tangential angeströmten Läufer mit einer Radialbeschaufelung und einem auf der Welle des Läufers angeordneten Generator. Die Turbinen-Generatoreinheit ist zweckmäßiger Weise längsmittig in dem Rotationsbecken so angeordnet, dass deren Läufer sich etwa im Zentrum eines dort entstehenden Gravitationswirbels erstreckt.

Zu Zeiten von Spitzenlast in einem Stromnetz wird aus dem ersten oberen Flusslauf 1 die maximal zulässige und mögliche Wassermenge entnommen und über die Zuführungen 5a, 5b, 5c unter Überbrückung aller Staustufen 3a, 3b, 3c in den unteren Flusslauf 2 eingespeist, und zwar ständig und parallel zu der für die Funktionsweise des Kanals erforderlichen zu entnehmenden Wassermenge aus dem oberen ersten Flusslauf 1.

Bei zu regulierender Stromerzeugung wird der Kanal 3 als Wasserspeicher benutzt, wobei die Stromspeichermenge sich nach den zulässigen Pegelständen der einzelnen Staustufen 3a, 3b, 3c richtet. Dafür ist jede der Zuführungen 5a, 5b, 5c mittels eines Schiebers 8 jeweils in Strömungsrichtung hinter den Rotationsbecken 6a, 6b, 6c absperrbar. Für die Erhöhung der Wasserpegel in den einzelnen Staustufen 5a, 5b, 5c wird insofern Leistung aus dem Netz entnommen, indem die Must-Run-Stromerzeugung reduziert wird und weniger Strom in das Netz eingespeist wird. Eine Erniedrigung des Pegelstandes in den einzelnen Staustufen 3a, 3b, 3c sorgt für eine Erhöhung der Must-Run-Einspeisung. Diese Art der Regelung ist unabhängig von der Regelung derjenigen Wassermenge in dem Kanal 3 bzw. in den Staustufen 3a, 3b, 3c, die zur Aufrechterhaltung des Schiffbetriebs erforderlich ist.

Die einzelnen Rotationsbecken 6a, 6b, 6c können im Erdreich verbaut sein.

In Hochwasserzeiten kann das beschriebene Verfahren genutzt werden, um je nach den Erfordernissen die Wassermengen gezielt abzuleiten oder zu speichern. Hierdurch können die Pegelstände in den potentiellen Überflutungsgebieten reduziert werden.

Wasserwirbelturbinen sind grundsätzlich unanfällig gegen Fischschlag, da diese kein Leitwerk im eigentlichen Sinne aufweisen. Aufgrund der geringen Strömungsgeschwindigkeiten in den Rotationsbecken 6a, 6b, 6c können diese gleichzeitig auch als Fischtreppe dienen. Aufgrund der Wasserverwirbelung im Rotationsbecken kommt es zu einer ökologisch positiven Konditionierung des Wassers durch eine höhere Sauerstoffanreichung und ggf. durch eine Kühlung des Gewässers.

### Bezugszeichen:

- 1: erster Flusslauf
- 2: zweiter Flusslauf
- 3: Kanal
- 3a, 3b, 3c: Staustufen
- 4: Wehre
- 5a, 5b, 5c: Zuführungen
- 6a, 6b, 6c: Rotationsbecken
- 7: Turbinen-Generatoreinheit
- 8: Schieber

## Patentansprüche

1. Laufwasserkraftwerk an einer Stauanlage, die einen Höhenunterschied zwischen zwei Gewässern, vorzugsweise zwischen natürlichen Fließgewässern überbrückt und die wenigstens zwei Staustufen (3a, 3b, 3c) aufweist, umfassend wenigstens eine wenigstens zwei Staustufen (3a, 3b, 3c) überbrückende Zuführung (5a, 5b, 5c), wobei in der Zuführung wenigstens (5a, 5b, 5c) wenigstens eine Turbine (7) angeordnet ist, die die potentielle Energie aufgrund des geodätischen Höhenunterschieds zwischen wenigstens zwei Staustufen (3, 3b, 3c) nutzt.

2. Laufwasserkraftwerk nach Anspruch 1, **dadurch gekennzeichnet, dass** in der Zuführung (5a, 5b, 5c) wenigstens ein Rotationsbecken (6a, 6b, 6c) oder ein Rotationsrohr zur Erzeugung von Gravitationswirbeln vorgesehen ist und dass die Turbine als Wasserwirbelturbine ausgebildet ist.

3. Laufwasserkraftwerk nach einem der Ansprüche 1 oder 2, **dadurch gekennzeichnet, dass** die Zuführung (5a, 5b, 5c) absperrbar an wenigstens eine Staustufe (3a, 3b, 3c), vorzugsweise einlaufseitig und auslaufseitig an wenigstens jeweils wenigstens eine Staustufe (3a, 3b, 3c) angeschlossen ist.

4. Laufwasserkraftwerk nach einem der Ansprüche 1 oder zwei, **dadurch gekennzeichnet, dass** die Zuführung (5a, 5b, 5c) sich absperrbar zwischen den Fließgewässern erstreckt und sowohl einlaufseitig als auch auslaufseitig an ein Fließgewässer angeschlossen ist.

5. Laufwasserkraftwerk nach einem der Ansprüche 1 bis 4, **dadurch gekennzeichnet, dass** in der Zuführung (5a, 5b, 5c) mehrere Turbinen (7) angeordnet sind, deren Anzahl vorzugsweise der Anzahl der zu überbrückenden Staustufen (3a, 3b, 3c) entspricht.

6. Laufwasserkraftwerk nach einem der Ansprüche 1 bis 5, **dadurch gekennzeichnet, dass** die Turbine (7) in einem Rotationsbecken (6a, 6b, 6c) oder auslaufseitig eines Rotationsbeckens angeordnet ist.

7. Verfahren zur Nutzung der potentiellen Energie zwischen zwei Gewässern, vorzugsweise zwischen zwei natürlichen Fließgewässern, die ein Oberwasser und ein Unterwasser bilden und die über wenigstens eine Stauanlage zwecks Überbrückung der Höhendifferenz miteinander verbunden sind, wobei das Verfahren die Abzweigung wenigstens eines Teilstroms aus dem Oberwasser über wenigstens eine Zuführung (5a, 5b, 5c), das Betreiben wenigstens einer Turbine (7) mit dem abgezweigten Teilstrom und das Einspeisen des energetisch genutzten Teilstroms in das Unterwasser oder in eine untere Staustufe (3a, 3b, 3c) umfasst.

8. Verfahren nach Anspruch 7, **dadurch gekennzeichnet, dass** jeweils ein Teilstrom von einer oberen Staustufe (3a, 3b, 3c) in eine untere Staustufe abgezweigt wird und dass jeder Teilstrom über eine Turbine (7) geführt wird.

9. Verfahren nach einem der Ansprüche 7 oder 8, **dadurch gekennzeichnet, dass** dem abgezweigten Teilstrom stromaufwärts einer Turbine (7) eine Rotationsströmung aufgegeben wird.

10. Verfahren nach einem der Ansprüche 7 bis 9, **dadurch gekennzeichnet, dass** als Turbine (7) wenigstens eine Wasserwirbelturbine Anwendung findet.

11. Verfahren nach einem der Ansprüche 7 bis 10, **dadurch gekennzeichnet, dass** eine Regelung der Durchflussmenge des abgezweigten Teilstroms über eine Speicherung von Wasser in wenigstens einer Staufstufe (3a, 3b, 3c) erfolgt.
